# EUROPÄISCHE PATENTSCHRIFT

(11) **EP 2 816 226 B1**
(45) Veröffentlichungstag und Bekanntmachung des Hinweises auf die Patenterteilung: **27.02.2019**
(21) Anmeldenummer: 14163861.9
(22) Anmeldetag: 08.04.2014
(51) Int. Cl.: F03D 80/70, F16C 33/10, F16C 17/02, F16C 17/04, F16C 33/26

(54) **Windkraftanlage mit einem Gleitlager**
Wind turbine with a slide bearing
Éolienne à palier lisse

(30) Priorität: 20.06.2013 DE 102013211710
(43) Veröffentlichungstag der Anmeldung: 24.12.2014
(73) Patentinhaber: Siemens Aktiengesellschaft, 80333 München (DE)
(72) Erfinder: Guerenbourg, Pierre-Antoine, 69006 Lyon (FR); Pedersen, Bo, 7620 Lemvig (DK); Thomsen, Kim, 7430 Ikast (DK)

(56) Entgegenhaltungen:
- EP-A1- 1 008 773
- EP-A1- 2 568 167
- EP-A2- 2 474 733
- WO-A1-2011/127510
- US-A1- 2012 068 460
- US-A1- 2012 099 993

## Beschreibung

Die Erfindung betrifft eine Windkraftanlage mit einem Gleitlager sowie ein Betreiben der Windkraftanlage zur Erzeugung elektrischen Stroms.

Eine Windkraftanlage mit einem Gleitlager ist zum Beispiel bekannt aus WO 2011/127510 A1, US 2012/068460 A1, US 2012/099993 A1 und EP 2568167 A1.

Eine Windkraftanlage soll typischerweise viele Jahre, vorzugsweise einige Jahrzehnte, in Betrieb bzw. betriebsbereit sein und effizient elektrischen Strom erzeugen. Die Anforderungen an Wartbarkeit und Robustheit der Windkraftanlage sind dabei hoch. Dies gilt insbesondere für sogenannte Offshore-Windkraftanlagen, d.h. Windkraftanlagen, die im Wasser, beispielsweise im Meer, aufgestellt sind. Eine Wartung von Offshore-Windkraftanlagen ist aufgrund erschwerten Zugangs oftmals aufwändig.

Typische Verschleißteile einer Windkraftanlage sind Lager. Derzeit werden in Windkraftanlagen vielfach Rollenlager mit Rollen und/oder Wälzlager mit Walzen verwendet. Ein Austausch der Rollen bzw. Walzen, die das Rollenlager bzw. Wälzlager aufweisen, ist aufwändig. Oftmals muss der Antriebsstrang der Windkraftanlage vollständig oder zumindest teilweise zerlegt werden. Dies ist in der Regel nur mittels eines Krans möglich. Insbesondere bei einer Offshore-Windkraftanlage ist jedoch ein Einsatz eines derartigen Krans teuer und aufwändig.

Eine Alternative zu einem Rollenlager oder einem Wälzlager ist beispielsweise ein Gleitlager. Hierbei sind insbesondere ein hydrodynamisches Gleitlager und ein hydrostatisches Gleitlager zu nennen. Ein Austausch der Verschleißteile, in diesem Fall insbesondere der Gleitbeläge, ist in der Regel einfacher als der Austausch der Rollen und Walzen bei Rollenlager bzw. Wälzlagern.

Allerdings weist der Einsatz von Gleitlagern in einer Windkraftanlage spezifische Probleme auf: Bei einem hydrodynamischen Lager ist ein hohes Anfangsdrehmoment nötig, wenn das Lager aus dem Stillstand heraus unter Belastung aufgrund Gravitation und/oder Wind in Drehung versetzt werden soll. Hydrostatische Lager, bei denen ein Schmiermittel unter hohem Druck eingeführt wird, haben den Nachteil, dass sie eine kontinuierliche Stromversorgung für ein Pumpsystem benötigen, welches zum einen ein potentielles Ausfallrisiko darstellt und zum anderen dauerhaft Energie, d.h. Strom, benötigen.

Aufgabe der Erfindung ist es somit aufzuzeigen, wie sich ein Gleitlager einer Windkraftanlage verbessern lässt. Im Speziellen soll ein Schmiermittel für den Betrieb des Gleitlagers möglichst effizient eingeführt werden.

Die Aufgabe wird gemäß den nebengeordneten Ansprüchen gelöst. Vorteilhafte Weiterbildungen sind in den Unteransprüchen angegeben.

Zur Lösung der Aufgabe wird eine Windkraftanlage mit einem Gleitlager angegeben, wobei das Gleitlager eine erste Lagerkomponente und eine zweite Lagerkomponente umfasst. Die erste Lagerkomponente und die zweite Lagerkomponente sind relativ zueinander drehbar um eine gemeinsame Rotationsachse angeordnet. Das Gleitlager weist mindestens einen Gleitbelag auf, der zwischen der ersten Lagerkomponente und der zweiten Lagerkomponente angeordnet ist. Der Gleitbelag weist eine Kontaktfläche auf, die für einen Kontakt mit einem Schmiermittel vorgesehen ist. Die Kontaktfläche weist eine Gleitbelagskanalöffnung zu einem Gleitbelagskanal auf, wobei der Gleitbelagskanal den Gleitbelag durchquert und dazu vorgesehen ist, Schmiermittel in einen Bereich zwischen der ersten Lagerkomponente und der zweiten Lagerkomponente einzuführen. Schließlich weist der Gleitbelag auf der Kontaktfläche eine Rille auf und die Rille umfasst die Gleitbelagskanalöffnung.

Eine Windkraftanlage kann Windenergie in elektrische Energie umwandeln. Eine Windkraftanlage wird auch als Windenergieanlage, Windkraftwerk oder Windkraftkonverter bezeichnet.

Die erste Lagerkomponente und/oder die zweite Lagerkomponente weist vorteilhafterweise die Form eines Hohlzylinders auf. Der Hohlzylinder kann einen kreisförmigen Umfang aufweisen. In anderen Worten kann die erste Lagerkomponente und/oder die zweite Lagerkomponente die Form einer Scheibe mit einer Öffnung oder einem Loch aufweisen.

Die Windkraftanlage weist vorteilhafterweise einen Turm, eine Gondel mit einem Maschinenrahmen, einen Generator und einen Rotor mit einer Nabe auf. An der Nabe ist mindestens ein Rotorblatt, vorzugsweise mindestens zwei Rotorblätter, nochmals vorzugsweise genau drei Rotorblätter, befestigt.

In einer ersten Alternative sind die erste Lagerkomponente mit dem Rotor und die zweite Lagerkomponente mit dem Maschinenrahmen jeweils mechanisch verbunden. In einer zweiten Alternative ist die erste Lagerkomponente mit dem Maschinenrahmen und die zweite Lagerkomponente mit dem Rotor jeweils mechanisch verbunden. In beiden Alternativen sind die erste Lagerkomponente und die zweite Lagerkomponente relativ zueinander drehbar gelagert oder angeordnet, insbesondere um eine gemeinsame, koaxiale Rotationsachse.

Vorteilhafterweise ist der Rotor mit einem Generator-Rotor, der auch als Rotorteil des Generators bezeichnet werden kann, verbunden.

Ein Raum zwischen der ersten Lagerkomponente und/oder der zweiten Lagerkomponente kann als Lagerinnenraum bezeichnet werden. Der Gleitbelag befindet sich vorteilhafterweise im Lagerinnenraum. Der Gleitbelag weist vorzugsweise eine quaderförmige Form auf. Des Weiteren kann der Gleitbelag eine Befestigungsfläche aufweisen, die der Kontaktfläche entgegengesetzt ist und parallel zu dieser angeordnet ist. In vorteilhaften Ausführungsformen ist die Befestigungsfläche mit der ersten Lagerkomponente, der zweiten Lagerkomponente und/oder einem Gleitbelagsträger direkt verbunden.

Eine Funktion des Gleitbelagskanals ist es, Schmiermittel von außen in den Bereich zwischen der ersten Lagerkomponente und der zweiten Lagerkomponente, also beispielsweise dem Lagerinnenraum, einzuführen.

Ein entscheidendes Merkmal der erfindungsgemäßen Windkraftanlage ist die Rille, die der Gleitbelag auf der Kontaktfläche aufweist. Ein Gleitbelag, dessen Kontaktfläche eine Rille mit einer Gleitbelagskanalöffnung aufweist, kann eine größere Fläche mit Schmiermittel bedecken als ein herkömmlicher Gleitbelag, der eine ebenso große Gleitbelagskanalöffnung, aber keine Rille aufweist. In einer Anlaufphase des Gleitlagers, also beim Anlaufen des Gleitlagers aus dem Stillstand, kann die Rille als Unterstützung für den hydrostatischen Betrieb fungieren. Wenn beispielsweise ein Schmiermittel durch den Gleitbelagskanal auf die Kontaktfläche gepresst wird, kann aufgrund der benetzten Fläche in der Rille Reibung, welche in der Anlaufphase des Gleitlagers im hydrostatischem Betrieb auftritt, reduziert werden im Vergleich zu einem Gleitbelag, das nur eine Gleitbelagskanalöffnung und keine Rille aufweist. Auch im hydrodynamischen Betrieb, d.h. in einem Betrieb mit beispielsweise konstanter Drehgeschwindigkeit des Gleitlagers, kann die aufzubringende Kraft bzw. der aufzubringende Druck durch die Rille verringert werden. Dadurch ist ein hybrides, d.h. ein hydrostatisch-hydrodynamisches Gleitlager, möglich.

Die Kontaktfläche kann eine Längsseite und eine Querseite aufweisen. Die Querseite ist beispielsweise genauso lang wie die Längsseite, d.h. es handelt sich um eine quadratische Kontaktfläche. In einer vorteilhaften Ausführungsform ist die Längsseite zwischen 100 und 200 Mal länger als eine Tiefe der Rille. Die Tiefe der Rille beträgt vorteilhafterweise zwischen 1 mm und 20 mm, insbesondere zwischen 5 mm und 10 mm.

Erfindungsgemäß ist das Gleitlager ein Radiallager.

Ein Radiallager, auch Querlager oder Traglager genannt, unterbindet bzw. erschwert eine Bewegung der ersten Lagerkomponente und/oder der zweiten Lagerkomponente in radialer Richtung, das heißt im Wesentlichen senkrecht zur axialen Richtung. Ein Axiallager, auch als Längslager, Drucklager oder Spurlager bezeichnet, unterbindet bzw. erschwert eine Bewegung der ersten Lagerkomponente und/oder der zweiten Lagerkomponente in radialer Richtung. Die Kombination aus Radiallager und Axiallager wird als Radiaxlager bezeichnet. Ein Beispiel für ein Radiaxlager ist ein einfach wirkendes Radiallager, das mit zwei axial wirkenden Lager-Paarungen ergänzt ist. Ein anderes, vorteilhaftes Beispiel eines Radiaxlagers ist ein Spitzenlager, auch als Körnerlager bezeichnet, bei dem sich eine Vielzahl von Spitzenpaaren gegenüberstehen, die beispielsweise kegelstumpfförmig ausgebildet sind.

Handelt es sich bei dem Gleitlager um ein Radiallager, weist die erste Lagerkomponente vorteilhafterweise eine Form eines äußeren Lagerrings und die zweite Lagerkomponente eine Form eines inneren Lagerrings auf. Vorteilhafterweise ist dann der Gleitbelag an einer Außenseite des inneren Lagerrings und/oder an einer Innenseite des äußeren Lagerrings befestigt.

In einer ersten Alternative ist der innere Lagerring mit dem Maschinenrahmen mechanisch verbunden und der Gleitbelag ist an der Außenseite des inneren Lagerrings befestigt. In einer zweiten Alternative ist der äußere Lagerring mit dem Maschinenrahmen mechanisch verbunden und der Gleitbelag ist an der Innenseite des äußeren Lagerrings befestigt. In einer dritten Alternative ist der innere Lagerring mit dem Rotor mechanisch verbunden und der Gleitbelag ist an der Außenseite des inneren Lagerrings befestigt. Schließlich ist in einer vierten Alternative der äußere Lagerring mit dem Rotor mechanisch verbunden und der Gleitbelag ist an der Innenseite des äußeren Lagerrings befestigt.

verbunden und der Gleitbelag ist an der Innenseite des äußeren Lagerrings befestigt.

Handelt es sich bei dem Gleitlager anders als beansprucht um ein Axiallager, weisen die erste Lagerkomponente und die zweite Lagerkomponente beide eine Form einer Lagerscheibe auf. Beide Lagerscheiben können eine ähnliche Form und Größe aufweisen. Vorteilhafterweise sind beide Lagerscheiben axial voneinander versetzt angeordnet, wobei die erste Lagerscheibe beispielsweise einer Nabe der Windkraftanlage zugewandt ist und die zweite Lagerscheibe einem Generator der Windkraftanlage zugewandt ist.

Das Gleitlager weist eine Drehrichtung auf, die durch die relativ zueinander drehbare erste Lagerkomponente und zweite Lagerkomponente definiert ist. Des Weiteren weist die Kontaktfläche einen in Drehrichtung vorderen Kontaktflächenbereich und einen in Drehrichtung hinteren Kontaktflächenbereich auf. Die Rille befindet sich im vorderen Kontaktflächenbereich.

Die Drehrichtung bezieht sich auf eine Drehung der ersten Lagerkomponente und der zweiten Lagerkomponente um die gemeinsame Rotationsachse.

In einer ersten Alternative ist die Kontaktfläche hälftig in den vorderen Kontaktflächenbereich und in den hinteren Kontaktflächenbereich aufgeteilt. In einer zweiten Alternative weist die Kontaktfläche einen mittleren Kontaktflächenbereich auf und die Kontaktfläche ist beispielsweise zu je einem Drittel in den vorderen Kontaktflächenbereich, den mittleren Kontaktflächenbereich und den hinteren Kontaktflächenbereich aufgeteilt.

Eine Anordnung der Rille im vorderen Kontaktflächenbereich weist mehrere Vorteile auf. Einerseits ist im hydrostatischen Betrieb des Gleitlagers eine Verringerung der Reibung größer, wenn sich die Rille im vorderen Kontaktflächenbereich im Vergleich zu einer Rille im hinteren Kontaktflächenbereich befindet. Andererseits ist auch im hydrodynamischen Betrieb des Gleitlagers eine Rille im vorderen Kontaktflächenbereich vorteilhaft, da der Bereich der Kontaktfläche, der "rillenlos", das heißt beispielsweise planar ist, vergrößert ist im Vergleich zu beispielsweise einem Gleitlager mit einer Rille im mittleren Bereich der Kontaktfläche. Dies ist unter anderem dadurch bedingt, dass eine kontinuierliche, rillenlose Fläche vorteilhaft für einen Aufbau eines hydrodynamischen Drucks ist.

Die Rille kann in einem Querschnitt senkrecht zu einer Längsausdehnung der Rille und senkrecht zur Kontaktfläche die Form eines Halbkreises aufweisen. Ebenso kann der Querschnitt der Rille ein Dreieck aufweisen. Auch andere Formen, wie beispielsweise die Hälfte einer Ellipse, können vorteilhaft sein. Bei der Form der Rille ist zwischen hydrodynamischen/hydrostatischen Gesichtspunkten und einer Einfachheit in der Herstellung abzuwägen.

Die Rille weist eine in Drehrichtung vordere Rillenwand und eine in Drehrichtung hintere Rillenwand auf. Die vordere Rillenwand weist einen vorderen Rillenwandneigungswinkel zwischen der vorderen Rillenwand und der Kontaktfläche auf, und die hintere Rillenwand weist einen hinteren Rillenwandneigungswinkel zwischen der hinteren Rillenwand und der Kontaktfläche auf. Des Weiteren ist der vordere Rillenwandneigungswinkel kleiner als der hintere Rillenwandneigungswinkel.

Ist die Kontaktfläche beispielsweise eine planare Fläche und die Rille weist im Querschnitt die Form eines Halbkreises auf, so beträgt der vordere Rillenwandneigungswinkel und der hintere Rillenwandneigungswinkel jeweils 90°. Ein vorderer Rillenwandneigungswinkel, der kleiner ist als ein hinterer Rillenwandneigungswinkel, was auch als abgeschrägte Kante, abgeschrägte Fläche oder Fase bezeichnet werden kann, weist mehrere Vorteile auf. Zunächst, im Stillstand des Gleitlagers, wenn beispielsweise Kontakt zwischen der Kontaktfläche kann eine hydrostatische Kapazität, das heißt eine Leistung des Gleitlagers, für denselben Schmiermitteleinspritzdruck im Vergleich zu einem Gleitlager ohne abgeschrägte Fläche erhöht werden. Andererseits, in einem Betriebszustand, bei dem das Gleitlager eine konstante Drehgeschwindigkeit aufweist, ermöglicht die abgeschrägte Fläche ein besseres Eindringen des Schmiermittels zwischen die Kontaktfläche und der im Lagerinnenraum gegenüberliegenden Fläche als in einem vergleichbaren Gleitbelag ohne abgeschrägte Fläche. Somit ermöglicht die abgeschrägte Kante beispielsweise auch ein schnelleres Erreichen des hydrodynamischen Betriebsdruckes.

In einer weiteren Ausführungsform weist das Gleitlager einen Gleitbelagsträger auf, der mit dem Gleitbelag verbunden ist. Des Weiteren weist der Gleitbelagsträger einen Gleitbelagsträgerkanal auf, der den Gleitbelagsträger durchquert, wobei der Gleitbelagsträgerkanal dazu vorgesehen ist, Schmiermittel in den Gleitbelagskanal einzuführen.

Der Gleitbelagsträger kann mit dem Gleitbelag einstückig verbunden sein. Ebenso kann der Gleitbelagsträger mit dem Gleitbelag mit mindestens einer Schraube, einem Bolzen und/oder einem Nagel verbunden sein. Vorteilhafterweise ist die Verbindung zwischen dem Gleitbelag und dem Gleitbelagsträger derart ausgestaltet, dass bei einem Verschleiß des Gleitbelags der Gleitbelag mit geringem Aufwand ausgetauscht werden kann.

Der Gleitbelagsträgerkanal und der Gleitbelagskanal können eine Form eines runden Zylinders aufweisen. Der Gleitbelagsträgerkanal und/oder der Gleitbelagskanal kann einen Innendurchmesser in einem Bereich zwischen 1 mm und 15 mm, insbesondere in einem Bereich zwischen 2 mm und 10 mm, aufweisen.

In einer weiteren Ausführungsform ist der Gleitbelagsträger mittels eines Drehgelenks drehbar relativ zu der ersten Lagerkomponente und/oder drehbar relativ zu der zweiten Lagerkomponente angeordnet.

Das Drehgelenk kann ein mechanisches Drehgelenk sein, welches beispielsweise einen Punktkontakt und/oder einen Linienkontakt umfasst, so dass der Gleitbelagsträger mit dem Gleitbelag drehbar gelagert ist. Das Drehgelenk hat den Vorteil, dass sich der Gleitbelag während des Betriebs des Gleitlagers in seiner Ausrichtung verändern kann, um beispielsweise eine gleichmäßige Dicke eines Schmiermittelfilms, welches sich zwischen der Kontaktfläche und der gegenüberliegenden Fläche des Lagerinnenraums befindet, einstellt.

In einer weiteren vorteilhaften Ausführungsform ist der Gleitbelagsträger und/oder der Gleitbelag biegsam.

Ein Vorteil eines biegsamen oder flexiblen Gleitbelags und/oder Gleitbelagsträgers ist, dass sich der Gleitbelag und/oder der Gleitbelagsträger an eine optimale Form und eine optimale Ausrichtung im Gleitlager anpassen kann.

Bei einer gewissen äußeren Belastung, d.h. einer äußeren Kraft mit einer gewissen Größe, die auf den Gleitbelagsträger wirkt, verformt sich der Gleitbelagsträger in einem Bereich zwischen 0 und 1000 µm (Mikrometer). Diese Verformung beruht auf Verformung Gleitbelagsträger, welcher beispielsweise Eisen aufweist, und auf Verformung des Gleitbelags, welches beispielsweise ein Polymerverbundstoff aufweist. Das Schmiermittel hingegen, beispielsweise ein Ölgemisch, wird bei Einwirken derselben äußeren Kraft in einem Bereich zwischen 0 und 100 µm komprimiert. In diesem Beispiel ist somit die Biegsamkeit bzw. Flexibilität des Gleitbelagsträgers relativ zur Kompressibilität des Schmiermittelfilms signifikant.

In einer weiteren Ausführungsform umfasst der Gleitbelagsträger ein Gleitbelagsträgermaterial, welches Eisen, insbesondere eine Eisenlegierung, aufweist.

Beispielsweise weist das Gleitbelagsträgermaterial Stahl und/oder Gusseisen auf.

Erfindungsgemäß weist die Windkraftanlage einen Rotor und eine Gondel auf und das Gleitlager ist ein Hauptlager zur drehbaren Lagerung des Rotors relativ zur Gondel.

Das Hauptlager einer Windkraftanlage kann einen Innendurchmesser von bis zu einigen Metern, insbesondere einen Innendurchmesser in einem Bereich zwischen einem Meter und zehn Meter, aufweisen. Es ist vorteilhaft, in einem Lager dieser Größe anstatt herkömmlicher Rollenlager und Wälzlager ein Gleitlager zu verwenden, da das Hauptlager sehr großen Kräften ausgesetzt sein kann. Es kann somit notwendig sein, das Gleitlager mit Schmiermitteleinspritzdruck zu betreiben. Dies zieht einen hohen Energiebedarf zur Aufrechterhaltung des Schmiermitteleinspritzdrucks nach sich. Insofern ist ein Gleitlager mit einem Gleitbelag, welches eine Rille aufweist, vorteilhaft, da der Schmiermitteleinspritzdruck verringert wird und dadurch das Gleitlager sparsam und energieeffizient betrieben werden kann.

In einer weiteren Ausführungsform weist das Schmiermittel Schmieröl auf.

Das Schmieröl weist hierbei eine Viskosität auf, die von einer Temperatur des Schmieröls abhängen kann. Vorteilhafterweise wird das Schmieröl in Abhängigkeit von der auftretenden Temperatur und einem Bereich einer Gleitgeschwindigkeit, das heißt einer Drehgeschwindigkeit des Gleitlagers, ausgewählt. Beispielsweise ist bei hohen Gleitgeschwindigkeiten ein Gleitöl mit niedriger Viskosität vorteilhaft. Dagegen ist bei hohen Temperaturen ein Schmieröl mit höherer Viskosität vorteilhaft, da die Viskosität des Schmieröls bei steigenden Temperaturen abnehmen kann.

In einer vorteilhaften Ausführungsform weist der Gleitbelag ein Gleitbelagsmaterial auf, welches ein Polymer und/oder ein Weißmetall aufweist.

Vorteilhafterweise weist das Gleitbelagsmaterial einen Polymerverbundstoff auf.

Das Polymer ist beispielsweise Nylon.

In einer weiteren vorteilhaften Ausführungsform weist das Gleitlager eine Vielzahl von Gleitbelägen auf. Im Falle eines radialen Gleitlagers können diese an der Außenseite des inneren Lagerrings und/oder an der Innenseite des äußeren Lagerrings befestigt sein.

Vorteilhaftweise weist das Gleitlager zwischen zwei und fünfzig Gleitbeläge, insbesondere zwischen zehn und vierzig Gleitbeläge, auf. Die Vielzahl von Gleitbelägen kann umlaufend, insbesondere kreisförmig umlaufend, angeordnet sein.

Die Erfindung betrifft weiterhin ein Betreiben der Windkraftanlage zur Erzeugung elektrischen Stroms. In anderen Worten betrifft die Erfindung eine Verwendung der Windkraftanlage zur Erzeugung elektrischen Stroms.

Vorteilhafterweise wird das Gleitlager während einer Anlaufphase der Drehbewegung hydrostatisch, und/oder während einer Phase der Drehbewegung mit einer konstanten Drehgeschwindigkeit hydrodynamisch betrieben.

Wird das Gleitlager je nach Phase der Drehbewegung hydrostatisch oder hydrodynamisch betrieben, kann das Gleitlager auch als hybrides, d.h. hydrostatisch-hydrodynamisches, Gleitlager bezeichnet werden. Das Betreiben einer Windkraftanlage mit einem hybriden Gleitlager ist effizient bezüglich der benötigten Energie zum Einpressen oder Einspritzen des Schmiermittels.

Nachfolgend wird die Erfindung anhand mehrerer schematischen, nicht maßstabsgetreuen Figuren näher erläutert. Des Weiteren werden Ausführungsbeispiele der Erfindung beschrieben. Es zeigen:
- Figur 1: eine Windkraftanlage,
- Figur 2: ein radiales Gleitlager mit einer Vielzahl von Gleitbelägen,
- Figur 3: ein axiales Gleitlager,
- Figur 4: ein Gleitbelag mit einer Rille und einem Gleitbelagskanal,
- Figur 5: einen ersten Querschnitt eines Gleitbelags mit einer Rille,
- Figur 6: einen zweiten Querschnitt des Gleitbelags,
- Figur 7: einen Querschnitt eines Gleitbelags mit einer Rille und einer abgeschrägten Fläche,
- Figur 8: einen Gleitbelag mit einem Gleitbelagskanal und einen Gleitbelagsträger mit einem Gleitbelagsträgerkanal, und
- Figur 9: einen Gleitbelag, einen Gleitbelagsträger und ein Drehgelenk.

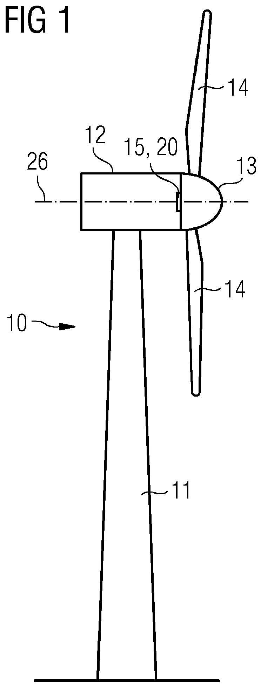

Die Figur 1 zeigt eine Windkraftanlage 10 mit einem Turm 11 und einer Gondel 12. Die Gondel 12 ist relativ zum Turm 11 drehbar um eine vertikale Rotationsachse gelagert. Die Gondel 12 weist einen Maschinenrahmen auf. Des Weiteren weist die Windkraftanlage 10 eine Nabe 13 auf, die an einem Rotor befestigt ist. Der Rotor weist eine Rotationsachse 26 auf. Die Nabe 13 ist mit dem Maschinenrahmen der Gondel 12 mittels eines Hauptlagers 15 verbunden. Das Hauptlager 15 ist in der in Figur 1 gezeigten Windkraftanlage 10 als ein Gleitlager 20 ausgestaltet. Schließlich weist die Windkraftanlage 10 noch drei Rotorblätter 14 auf (zwei der drei Rotorblätter 14 sind in Figur 1 gezeigt).

Die Nabe 13 mit den Rotorblättern 14 dreht sich mit einer Drehgeschwindigkeit von 11 Umdrehungen pro Minute bis 15 Umdrehungen pro Minute um die Rotationsachse 26. In einem alternativen Ausführungsbeispiel kann die Drehgeschwindigkeit bis zu 20 Umdrehungen pro Minute erreichen.

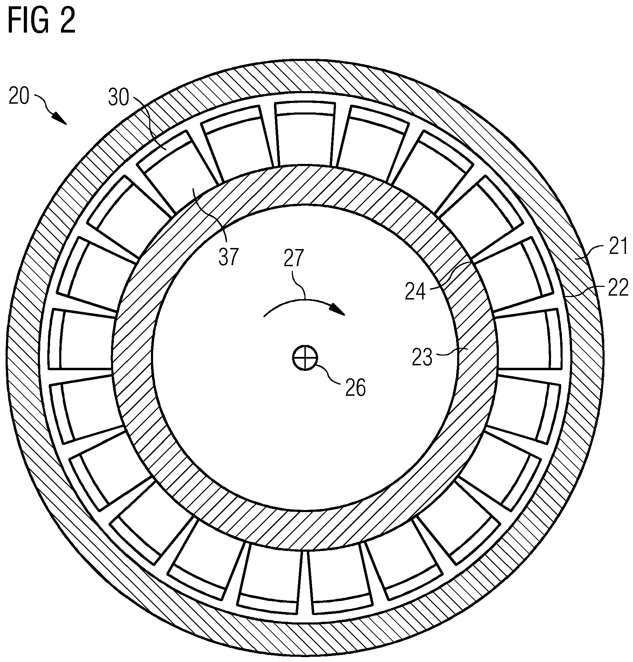

Die Figur 2 zeigt ein radiales Gleitlager 20 mit einer Vielzahl von Gleitbelägen 30. Die Vielzahl von Gleitbelägen 30 weist in Figur 2 genau 21 Gleitbeläge 30 auf. Die Gleitbeläge 30 sind umlaufend kreisförmig angeordnet.

Das Gleitlager umfasst eine erste Lagerkomponente 21, die als ein äußerer Lagerring ausgestaltet ist und eine Innenseite des äußeren Lagerrings 22 umfasst. Das Gleitlager umfasst des Weiteren eine zweite Lagerkomponente 23, die als ein innerer Lagerring 23 ausgestaltet ist und eine Außenseite des inneren Lagerrings 24 umfasst. Beide Lagerkomponenten 21, 23 weisen jeweils eine Form eines Hohlzylinders auf und sind koaxial angeordnet.

In dem in Figur 2 gezeigten Ausführungsbeispiel ist die zweite Lagerkomponente 23 drehbar um eine Rotationsachse 26 mit einer Drehrichtung 27 relativ zu der ersten Lagerkomponente 21 gelagert bzw. angeordnet.

Der Durchmesser des inneren Lagerrings beträgt circa 1,5 Meter. In einem alternativen Ausführungsbeispiel kann der innere Lagerring einen Durchmesser im Bereich zwischen 1 Meter und 4 Meter aufweisen.

Die Gleitbeläge 30 sind mit Gleitbelagsträger 37 verbunden. Die Gleitbelagsträger 37 sind mit der Außenseite des inneren Lagerings 24 verbunden und sind daran befestigt. Zwischen dem inneren Lagerring und dem äußeren Lagerring befindet sich ein Lagerinnenraum, der teilweise mit Schmiermittel ausgefüllt ist. Das Schmiermittel weist Schmieröl, insbesondere ein Ölgemisch, auf. Ein durchschnittlicher Abstand zwischen dem Gleitbelag 30 und der Innenseite des äußeren Lagerrings 22 beträgt 0,5 mm (Millimeter). Das Schmieröl füllt diesen Abstand zumindest teilweise aus.

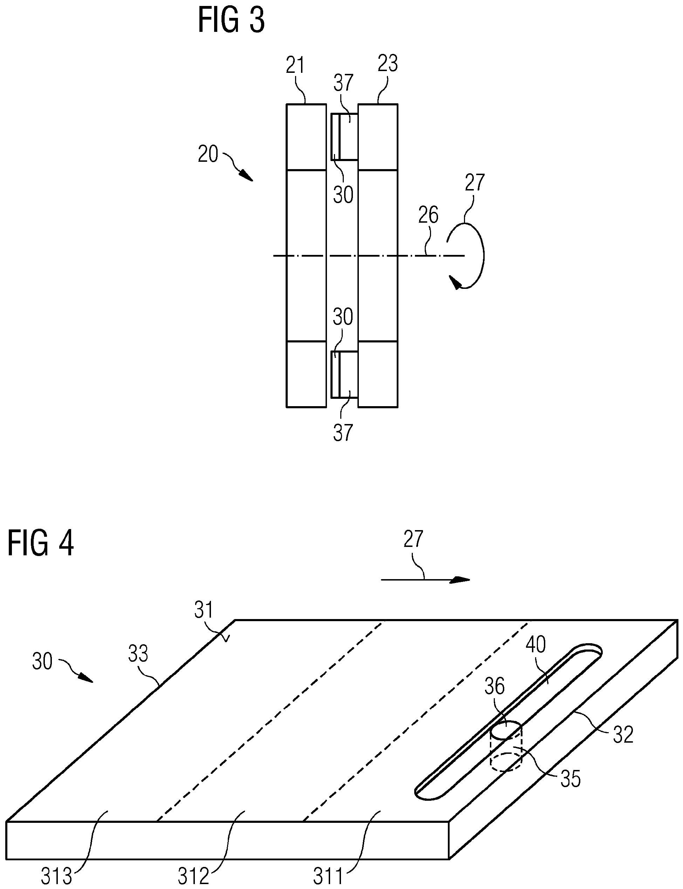

Die Figur 3 zeigt ein axiales Gleitlager 20. Das Gleitlager 20 umfasst eine erste Lagerkomponente 21 und eine zweite Lagerkomponente 23. Beide Lagerkomponenten 21, 23 weisen eine Form einer Scheibe auf. An der zweiten Lagerkomponente 23 ist ein Gleitbelagsträger 37 mit einem Gleitbelag 30 befestigt. Im Betrieb des Gleitlagers 20 dreht sich die erste Lagerkomponente 21 relativ zu der zweiten Lagerkomponente 23 um eine Rotationsachse 26 und definiert dadurch eine Drehrichtung 27.

Die Figur 4 zeigt einen Gleitbelag 30 mit einer Kontaktfläche 31, die 22 cm (Zentimeter) mal 15 cm groß ist. Die Kontaktfläche 31 ist rechteckig und weist eine in Drehrichtung 27 vorne befindliche Vorderkante 32 und eine dazu parallele Hinterkante 33 auf. Der Gleitbelag 30 weist eine Dicke von 2 cm auf. Er weist Nylon auf.

Die Kontaktfläche weist einen in Drehrichtung 27 vorderen Kontaktflächenbereich 311, einen mittleren Kontaktflächenbereich 312 und einen hinteren Kontaktflächenbereich 313 auf. Im vorderen Kontaktflächenbereich 311 befindet sich eine Rille 40, die 7 mm tief ist. Des Weiteren weist die Kontaktfläche 31 eine Gleitbelagkanalöffnung 36 auf, die einen Durchmesser von 1 cm aufweist. Schließlich durchquert ein Gleitbelagskanal 35 den Gleitbelag 30.

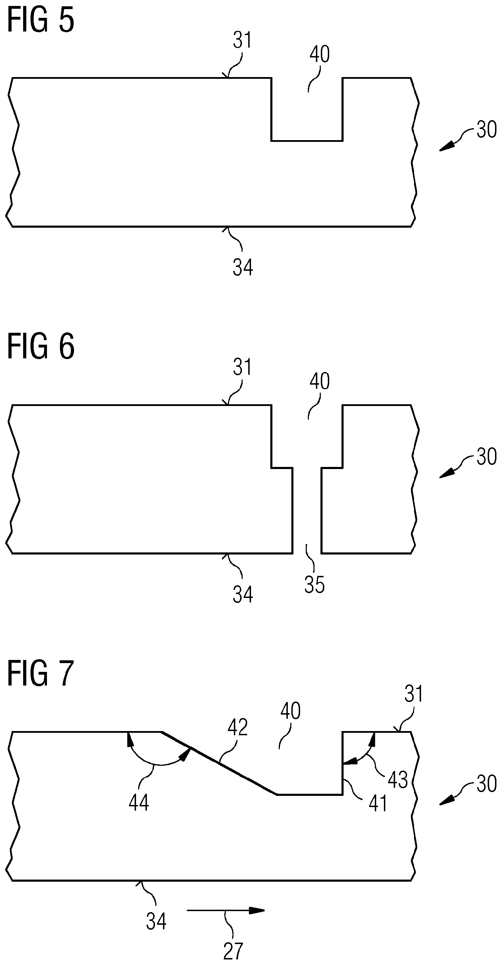

Die Figur 5 zeigt einen ersten Querschnitt eines Gleitbelags 30, der eine Kontaktfläche 31 und eine dazu parallele Befestigungsfläche 34 aufweist. Des Weiteren weist die Kontaktfläche 31 eine Vorderkante 32 und eine Hinterkante 33 (nicht gezeigt) auf. Der Querschnitt ist senkrecht zur Vorderkante 32 und zur Hinterkante 33. Im ersten, in Figur 4 gezeigten Querschnitt ist eine Rille 40 zu sehen.

Figur 6 zeigt denselben Gleitbelag 30 in einem zweiten Querschnitt. Der zweite Querschnitt ist so gewählt, dass man einen Gleitbelagskanal 35 des Gleitbelags 30 sehen kann. Der Gleitbelagskanal 35 verläuft im Wesentlichen senkrecht zur Kontaktfläche 31 bzw. zur Befestigungsfläche 34 und weist einen Durchmesser auf, der kleiner ist als eine Breite der Rille 40.

In Figur 7 ist ein weiterer Gleitbelag 30 in einem Querschnitt gezeigt. Der Gleitbelag 30 weist eine Rille 40 auf, die eine vordere Rillenwand 41 und eine hintere Rillenwand 42 aufweist. Die Unterscheidung zwischen vorderer Rillenwand 41 und unterer Rillenwand 42 wird relativ zur Drehrichtung 27 getroffen.

Es ist zu sehen, dass die vordere Rillenwand 41 mit einer Kontaktfläche 31 des Gleitbelags 30 einen Winkel von 90° einschließt. Hingegen schließt die hintere Rillenwand 42 mit der Kontaktfläche 31 einen Winkel von 135° ein. Der Winkel zwischen der vorderen Rillenwand 41 und der Kontaktfläche 31 wird als der vordere Rillenwandneigungswinkel 43 bezeichnet; der Winkel zwischen der hinteren Rillenwand 42 und der Kontaktfläche 31 wird als der hintere Rillenwandneigungswinkel 44 bezeichnet. Eine wie in Figur 6 gezeigte geneigte hintere Rillenwand 42 wird auch als abgeschrägte Fläche oder abgeschrägte Kante bezeichnet.

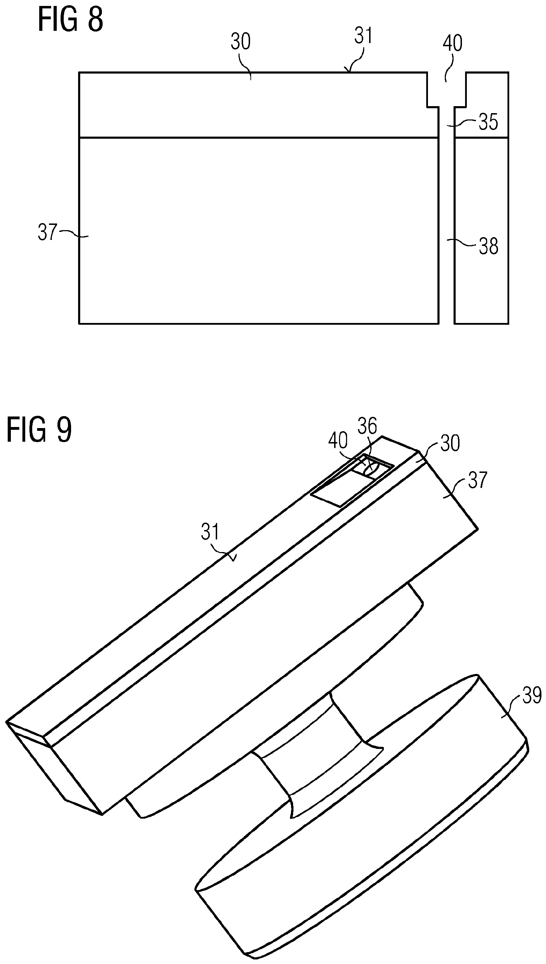

Die Figur 8 zeigt einen Gleitbelag 30 mit einer Kontaktfläche 31, einer Rille 40 und einen Gleitbelagskanal 35, der den Gleitbelag 30 durchquert und mit der Rille 40 verbunden ist. Des Weiteren zeigt die Figur 7 einen Gleitbelagsträger 37, der von einem Gleitbelagsträgerkanal 38 durchquert wird. Der Gleitbelag 30 ist mit dem Gleitbelagsträger 37 verbunden. In dem in Figur 7 gezeigten Ausführungsbeispiel ist der Gleitbelag 30 mit dem Gleitbelagsträger 37 festgeklammert.

Um effizient Schmiermittel in die Rille 40 einzuführen, sind der Gleitbelagskanal 35 und der Gleitbelagsträgerkanal 38 miteinander bündig verbunden.

Die Figur 9 schließlich zeigt einen Gleitbelag 30 mit einer Kontaktfläche 31, einer Rille 40 und einer Gleitbelagskanalöffnung 36, der mit einem Gleitbelagsträger 37 verbunden ist. Der Gleitbelagsträger 37 wiederum ist mit einem Drehgelenk 39 verbunden. Das Drehgelenk 39 ermöglicht eine Ausrichtung des Gleitbelags 30 im Gleitlager 20, indem das Drehgelenk 39 um einen Drehpunkt gedreht werden kann. Das Drehgelenk 39 wiederum kann beispielsweise an einer Außenseite eines inneren Lagerrings 24 befestigt werden.

## Patentansprüche

1. Windkraftanlage (10) mit einem Gleitlager (20),
wobei
- das Gleitlager (20) ein Radiallager ist,
- die Windkraftanlage (10) einen Rotor und eine Gondel (12) aufweist, und das Gleitlager (20) ein Hauptlager (15) zur drehbaren Lagerung des Rotors relativ zur Gondel (12) ist,
- das Gleitlager (20) eine erste Lagerkomponente (21) und eine zweite Lagerkomponente (23) umfasst,
- die erste Lagerkomponente (21) und die zweite Lagerkomponente (23) relativ zueinander drehbar um eine gemeinsame Rotationsachse (26) angeordnet sind,
- das Gleitlager (20) eine Drehrichtung (27) aufweist, die durch die relativ zueinander drehbare erste Lagerkomponente (21) und die zweite Lagerkomponente (23) definiert ist,
- das Gleitlager (20) mindestens einen Gleitbelag (30) aufweist, der zwischen der ersten Lagerkomponente (21) und der zweiten Lagerkomponente (23) angeordnet ist,
- der Gleitbelag (30) eine Kontaktfläche (31) aufweist, die für einen Kontakt mit einem Schmiermittel vorgesehen ist,
- die Kontaktfläche (31) eine Gleitbelagskanalöffnung (36) zu einem Gleitbelagskanal (35) aufweist, wobei der Gleitbelagskanal (35) den Gleitbelag (30) durchquert und dazu vorgesehen ist, Schmiermittel in einen Bereich zwischen der ersten Lagerkomponente (21) und der zweiten Lagerkomponente (23) einzuführen,
- die Kontaktfläche (31) einen in Drehrichtung (27) vorderen Kontaktflächenbereich (311) und einen in Drehrichtung (27) hinteren Kontaktflächenbereich (313) aufweist,
- der Gleitbelag (30) auf der Kontaktfläche (31) eine Rille (40) aufweist und die Rille (40) die Gleitbelagskanalöffnung (36) umfasst, und
- sich die Rille (40) im vorderen Kontaktflächenbereich (311) befindet,
- die Rille (40) eine in Drehrichtung (27) vordere Rillenwand (41) und eine in Drehrichtung (27) hintere Rillenwand (42) aufweist,
- die vordere Rillenwand (41) einen vorderen Rillenwandneigungswinkel (43) zwischen der vorderen Rillenwand (41) und der Kontaktfläche (31) aufweist,
- die hintere Rillenwand (42) einen hinteren Rillenwandneigungswinkel (44) zwischen der hinteren Rillenwand (42) und der Kontaktfläche (31) aufweist, und
- der vordere Rillenwandneigungswinkel (43) kleiner als der hintere Rillenwandneigungswinkel (44) ist.

2. Windkraftanlage (10) nach Anspruch 1,
wobei
- das Gleitlager (20) einen Gleitbelagsträger (37) aufweist, der mit dem Gleitbelag (30) verbunden ist,
- der Gleitbelagsträger (37) einen Gleitbelagsträgerkanal (38) aufweist, der den Gleitbelagsträger (37) durchquert, und
- der Gleitbelagsträgerkanal (38) dazu vorgesehen ist, Schmiermittel in den Gleitbelagskanal (35) einzuführen.

3. Windkraftanlage (10) nach Anspruch 2, wobei der Gleitbelagsträger (37) mittels eines Drehgelenks (39) drehbar relativ zu der ersten Lagerkomponente (23) und/oder drehbar relativ zu der zweiten Lagerkomponente (21) angeordnet ist.

4. Windkraftanlage (10) nach einem der Ansprüche 2 oder 3,
wobei der Gleitbelagsträger (37) und/oder der Gleitbelag (30) biegsam ist.

5. Windkraftanlage (10) nach einem der Ansprüche 2 bis 4,
wobei der Gleitbelagsträger (37) ein Gleitbelagsträgermaterial umfasst, welches Eisen, insbesondere eine Eisenlegierung, aufweist.

6. Windkraftanlage (10) nach einem der Ansprüche 1 bis 5,
wobei das Schmiermittel ein Schmieröl aufweist.

7. Windkraftanlage (10) nach einem der Ansprüche 1 bis 6,
wobei der Gleitbelag (30) ein Gleitbelagsmaterial umfasst, welches ein Polymer und/oder ein Weißmetall aufweist.

8. Betreiben einer Windkraftanlage (10) nach einem der Ansprüche 1 bis 7 zur Erzeugung elektrischen Stroms.

9. Betreiben einer Windkraftanlage (10) nach Anspruch 8,
wobei
- das Gleitlager (20) während einer Anlaufphase der Drehbewegung hydrostatisch betrieben wird, und/oder
- das Gleitlager (20) während einer Phase der Drehbewegung mit einer konstanten Drehgeschwindigkeit hydrodynamisch betrieben wird.

## Claims

1. Wind power plant (10) having a sliding bearing (20), wherein
- the sliding bearing (20) is a radial bearing,
- the wind power plant (10) has a rotor and a gondola (12), and the sliding bearing (20) is a main bearing (15) for rotatably bearing the rotor relative to the gondola (12),
- the sliding bearing (20) comprises a first bearing component (21) and a second bearing component (23),
- the first bearing component (21) and the second bearing component (23) are arranged such that they can rotate relative to one another about a common rotational axis (26),
- the sliding bearing (20) has a rotational direction (27) which is defined by the first bearing component (21) and the second bearing component (23) which can rotate relative to one another,
- the sliding bearing (20) has at least one sliding lining (30) which is arranged between the first bearing component (21) and the second bearing component (23),
- the sliding lining (30) has a contact face (31) which is provided for contact with a lubricant,
- the contact face (31) has a sliding lining duct opening (36) to a sliding lining duct (35), wherein the sliding lining duct (35) crosses the sliding lining (30) and is provided for feeding lubricant into a region between the first bearing component (21) and the second bearing component (23),
- the contact face (31) has a contact face region (311) at the front in the rotational direction (27) and a contact face region (313) at the rear in the rotational direction (27),
- the sliding lining (30) has a groove (40) on the contact face (31), and the groove (40) surrounds the sliding lining duct opening (36), and
- the groove (40) is located in the front contact face region (311),
- the groove (40) has a groove wall (41) at the front in the rotational direction (27) and a groove wall (42) at the rear in the rotational direction (27),
- the front groove wall (41) has a front groove wall inclination angle (43) between the front groove wall (41) and the contact face (31),
- the rear groove wall (42) has a rear groove wall inclination angle (44) between the rear groove wall (42) and the contact face (31), and
- the front groove wall inclination angle (43) is smaller than the rear groove wall inclination angle (44).

2. Wind power plant (10) according to Claim 1,
wherein
- the sliding bearing (20) has a sliding lining carrier (37) which is connected to the sliding lining (30),
- the sliding lining carrier (37) has a sliding lining carrier duct (38) which crosses the sliding lining carrier (37), and
- the sliding lining carrier duct (38) is provided for feeding lubricant into the sliding lining duct (35).

3. Wind power plant (10) according to Claim 2,
wherein the sliding lining carrier (37) is arranged, by means of a rotary joint (39), such that it can rotate relative to the first bearing component (23) and/or can rotate relative to the second bearing component (21).

4. Wind power plant (10) according to one of Claims 2 or 3, wherein the sliding lining carrier (37) and/or the sliding lining (30) are/is flexible.

5. Wind power plant (10) according to one of Claims 2 to 4, wherein the sliding lining carrier (37) comprises a sliding lining carrier material which has iron, in particular an iron alloy.

6. Wind power plant (10) according to one of Claims 1 to 5, wherein the lubricant has a lubricating oil.

7. Wind power plant (10) according to one of Claims 1 to 6, wherein the sliding lining (30) comprises a sliding lining material which has a polymer and/or a white metal.

8. Operation of a wind power plant (10) according to one of Claims 1 to 7 in order to generate electric current.

9. Operation of a wind power plant (10) according to Claim 8, wherein
- the sliding bearing (20) is operated hydrostatically during a startup phase of the rotational movement, and/or
- the sliding bearing (20) is operated hydrodynamically during a phase of the rotational movement with a constant rotational speed.

## Revendications

1. Éolienne (10) à palier lisse (20), dans laquelle
- le palier lisse (20) est un palier radial,
- l'éolienne (10) présente un rotor et une nacelle (12), et le palier lisse (20) est un palier principal (15) pour une assise du rotor en rotation par rapport à la nacelle (12),
- le palier lisse (20) comprend une première composante de palier (21) et une deuxième composante de palier (23),
- la première composante de palier (21) et la deuxième composante de palier (23) sont disposées rotatives l'une par rapport à l'autre sur un axe de rotation (26) commun,
- le palier lisse (20) présente un sens de rotation (27) qui est défini par la première composante de palier (21) et la deuxième composante de palier (23) rotatives l'une par rapport à l'autre,
- le palier lisse (20) présente au moins une garniture de glissement (30) qui est disposée entre la première composante de palier (21) et la deuxième composante de palier (23),
- la garniture de glissement (30) présente une surface de contact (31) qui est prévue pour un contact avec un lubrifiant,
- la surface de contact (31) présente une ouverture de canal de garniture de glissement (36) vers un canal de garniture de glissement (35), dans laquelle le canal de garniture de glissement (35) traverse la garniture de glissement (30) et est prévu pour introduire du lubrifiant dans une zone entre la première composante de palier (21) et la deuxième composante de palier (23),
- la surface de contact (31) présente une zone de surface de contact avant (311) dans le sens de rotation (27) et une zone de surface de contact arrière (313) dans le sens de rotation (27),
- la garniture de glissement (30) présente une rainure (40) sur la surface de contact (31) et la rainure (40) comprend l'ouverture de canal de garniture de glissement (36), et
- la rainure (40) se trouve dans la zone de surface de contact avant (311),
- la rainure (40) présente une paroi de rainure avant (41) dans le sens de rotation (27) et une paroi de rainure arrière (42) dans le sens de rotation (27),
- la paroi de rainure avant (41) présente un angle d'inclinaison de paroi de rainure avant (43) entre la paroi de rainure avant (41) et la surface de contact (31),
- la paroi de rainure arrière (42) présente un angle d'inclinaison de paroi de rainure arrière (44) entre la paroi de rainure arrière (42) et la surface de contact (31), et
- l'angle d'inclinaison de paroi de rainure avant (43) est plus petit que l'angle d'inclinaison de paroi de rainure arrière (44).

2. Éolienne (10) selon la revendication 1, dans laquelle
- le palier lisse (20) présente un support de garniture de glissement (37) qui est relié à la garniture de glissement (30),
- le support de garniture de glissement (37) présente un canal de support de garniture de glissement (38) qui traverse le support de garniture de glissement (37), et
- le canal de support de garniture de glissement (38) est prévu pour introduire du lubrifiant dans le canal de garniture de glissement (35).

3. Éolienne (10) selon la revendication 2, dans laquelle le le support de garniture de glissement (37) est disposé rotatif par rapport à la première composante de palier (23) et/ou rotatif par rapport à la deuxième composante de palier (21) au moyen d'une articulation rotative (39).

4. Éolienne (10) selon l'une des revendications 2 ou 3, dans laquelle le support de garniture de glissement (37) et/ou la garniture de glissement (30) est/sont flexible(s).

5. Éolienne (10) selon l'une des revendications 2 à 4, dans laquelle le support de garniture de glissement (37) comprend un matériau de support de garniture de glissement qui présente du fer, en particulier un alliage de fer.

6. Éolienne (10) selon l'une des revendications 1 à 5, dans laquelle le lubrifiant présente une huile lubrifiante.

7. Éolienne (10) selon l'une des revendications 1 à 6, dans laquelle la garniture de glissement (30) comprend un matériau de garniture de glissement qui présente un polymère et/ou un métal blanc.

8. Exploitation d'une éolienne (10) selon l'une des revendications 1 à 7 pour produire du courant électrique.

9. Exploitation d'une éolienne (10) selon la revendication 8, dans laquelle
- le palier lisse (20) est exploité de manière hydrostatique pendant une phase de démarrage de la rotation, et/ou
- le palier lisse (20) est exploité de façon hydrodynamique à une vitesse de rotation constante pendant une phase de la rotation.
